# EUROPÄISCHE PATENTSCHRIFT

(11) **EP 1 703 124 B1**
(45) Veröffentlichungstag und Bekanntmachung des Hinweises auf die Patenterteilung: **05.05.2010**
(21) Anmeldenummer: 05005423.8
(22) Anmeldetag: 12.03.2005
(51) Int. Cl.: F03D 1/06, F03D 7/02, F03D 11/04

(54) **Windkraftanlage in kompakter Bauart**
Compact wind turbine
Éolienne compacte

(43) Veröffentlichungstag der Anmeldung: 20.09.2006
(73) Patentinhaber: Vogel, Ernst, 29120 Combrit (FR)
(72) Erfinder: Vogel, Ernst, 29120 Combrit (FR)

(56) Entgegenhaltungen:
- WO-A-00/34650
- BE-A2- 856 127
- DE-U1- 20 203 119
- US-A- 2 633 921
- US-A- 4 159 191
- US-A- 4 289 970
- US-A- 6 064 123
- PATENT ABSTRACTS OF JAPAN Bd. 2003, Nr. 12, 5. Dezember 2003 (2003-12-05) -& JP 2004 340108 A (NEMOTO YASUYUKI; USHIYAMA IZUMI; FUKEI SECOLO:KK), 2. Dezember 2004 (2004-12-02)

## Beschreibung

Windkraftanlagen nach aktuellem Stand der Technik, mit großen Rotordurchmesser und schmalen Rotorblättern, haben sich, nach der Wasserkraft, im Bereich Nutzung erneuerbarer Energie, am besten durchgesetzt. Sie bleiben jedoch im Vergleich zu thermischen Kraftwerken unwirtschaftlich. Da nützen Anlagen mit Riesenrotoren bis 0 160 m (wie geplant) wenig, denn die Gestehungskosten steigen gleichermaßen. Diese Art Eolienne bleibt fraglos unrentabel.

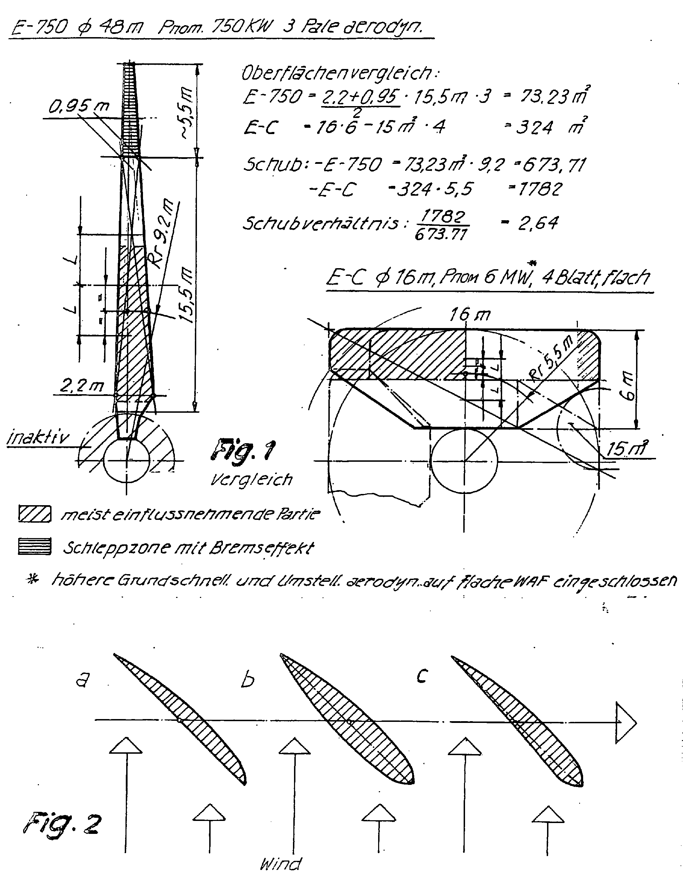

Der Grund dafür ist nach neuesten Erkenntnissen die ungenügend genutzte Windkraft durch die eigentlich falsch konzipierte Form des Rotorblatts. Dies ist experimentell erwiesen und in nachfolgender Beschreibung näher erklärt (Fig. 1).

Zielsetzung der Erfindung ist eine starke Leistungssteigerung durch kleinere kompakte Bauart und damit erreichbare hohe Rentabilität solche Windkraftanlagen sind beispielsweise aus der DE-A-3 116 396 oder aus der EP-A-1 233 178 bekannt. Dass dies möglich ist geht aus folgender Erklärung hervor.

Neben der Tatsache, dass große Windauftrittsfläche (WAF) am langen Hebelarm die größte Kraft aufbringt, ist die Abkehr vom aerodynamischen Paleprofil von entscheidender Bedeutung. Die große Auswirkung dieser beiden Punkte ist durch ausgedehnte Teste erkannt und mit Vergleichsberechnungen bestätigt worden, ergibt erst damit richtigen Begriff für hohen Wirkungsgrad der Windenergienutzung. Der Bau von Anlagen mit Rotoren mit breiten Blättern bis zu voller Kreisflächennutzung ist eigentlich eine Weiterentwicklung der Rotoren für leistungsstarke Windmühlen. Windkraftanlagen stehen dazu extrem im Widerspruch, vermögen mit ihren schmalen Rotorblätter nur ungenügend Kraft aufzunehmen, was noch zusätzlich verschlechtert wird durch das allgemein angewandte aerodynamisch geformte Blattprofil.

Für besseres Verständnis steht gemäss Fig. 1 ein Vergleich, welcher die Schwächen und Stärken der herkömmlichen Pale zu breiten Blättern, gemäss Vorschlag, aufzeigt.
a- Rotorblatt einer Windkraftanlage Standardanlage P 750 kW Rotor 0 48 m mit schmalen Rotorblatt in aerodynamischer Form = E-750.
b- Rotorblätter einer Windkraftanlage kompakt Rotor Ø 16 m = E-K

Dabei fällt auf, dass trotz dem 3 mal kleineren Rotor Ø die Länge des theoretischen Radius nur 1,6 mal kürzer ist und die tatsächlich wirksame Oberfläche des E-K die der E-750 weit übertrifft. Dies ist gegeben durch die geometrische Form des Blattes. Beide haben die Form eines Trapezes, sind jedoch umgekehrt auf die Nabe aufgesetzt:
a- E-750 = schmales nach außen spitzauslaufendes Trapez.
b- E-K = breites nach außen verbreitertes Trapez.

Dabei verschieben sich die Rr (schnittpunktreziproker Radius) entsprechend der jeweils stärker einflussnehmenden Partie der Oberfläche und damit die Länge der theoretisch wirksamen Hebelarme, für E-750 ungünstig der Nabe zu, für E-K vorteilhaft in die hochaktive Kraftzone nach außen. Die Festlegung der Größe dieser Rr ist mit dem schnittpunktreziproken 1/2 Radius (E-750) resp. 1/3 Radius (E-K) annähernd gegeben. Augenfällig ist die Schwäche der E-750 noch negativ unterstützt durch dem Umstand, dass eigentlich nur 3/4 der Oberfläche nutzbar ist, der übrige 1/4 sogar störend im hochaktiven Teil des Kreisfeldes des Rotors liegt. Weil dabei die Palespitzen infolge der höheren Umlaufgeschwindigkeit Außen in den Wind gestoßen werden laufen sie schneller als sie vom Wind getrieben würden.

Dabei erfolgt kein Schub in der Kraftzone, statt hohe Kraftaufnahme sogar Bremseffekt. Ebenfalls zu beachten ist die 4 mal größere wirksame Oberfläche des Blattes des 3 mal kleineren Rotors.

Zusätzlich kommen noch weitere Pluspunkte für E-K wie:
a- Dank der Rotor Durchmesser Halbierung oder Reduzierung erhöht sich die Grundschnelligkeit um 2 mal 75% bei ≥ 10 m/s Windgeschwindigkeit (bei ≤ 8 m/s über 100%). Damit ist es möglich eine 3 bis 4 mal kleinere Übersetzung zu wählen, was sich schlussendlich im entsprechend höheren Drehmoment auswirkt. Gleichfalls können alle kraftführenden Teile leichter gebaut werden. Das sind große Beiträge zur Kostensenkung.
b- Ein wesentlicher Vorteil (wie schon angetönt) liegt in der Abkehr vom "vermeintlichen Ideal" der Form des aerodynamischen Paleprofils auf flache Windauftrittsfläche. Fig. 2 veranschaulicht die einfache Wirkungsweise bei Windauftreten unter 45°. Während bei flacher WAF (a) der Wind ganz direkt aufgenommen wird, kann er bei aerodyn. Blattprofil (b), dank resp. infolge der guten Windschlüpfrigkeit, seitlich elegant ausweichen. Beim aerodyn. auftriebnutzenden Profil (c) ist eine Verbesserung festzustellen, was mit der Annährung an die flache WAF erklärbar ist (experimentell nachgewiesen).

Aus diesen Erkenntnissen ist es sicher sinnvoll diese Breitblattbauart mit flacher oder leicht konkaver WAF, auszubauen, was Zweck des Erfindungsgegenstandes ist.

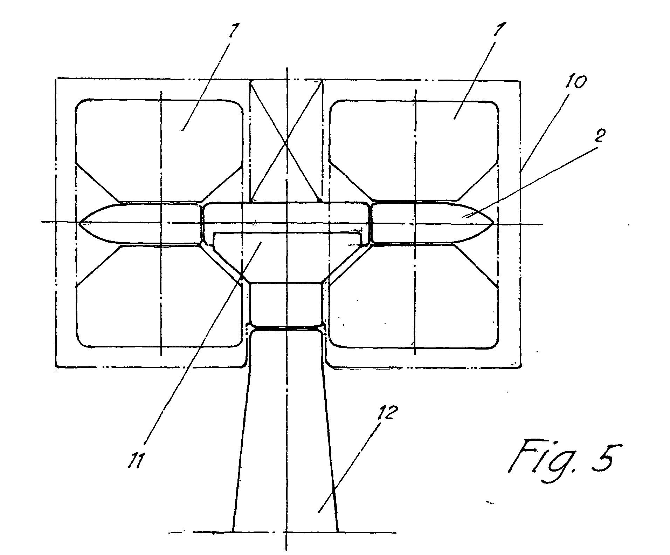

Vorteilhaft ist die große Freizügigkeit der Gestaltung. Einzig die Platzierung auf einem hohen Mast hat wegen der großen Ausladung der Rotor-Bandbreite seine Grenzen, eine Zwillingsanlage mit 10-12 m Rotordurchmesser bis etwa 30 m Achshöhe ist trotzdem denkbar, Fig. 5.

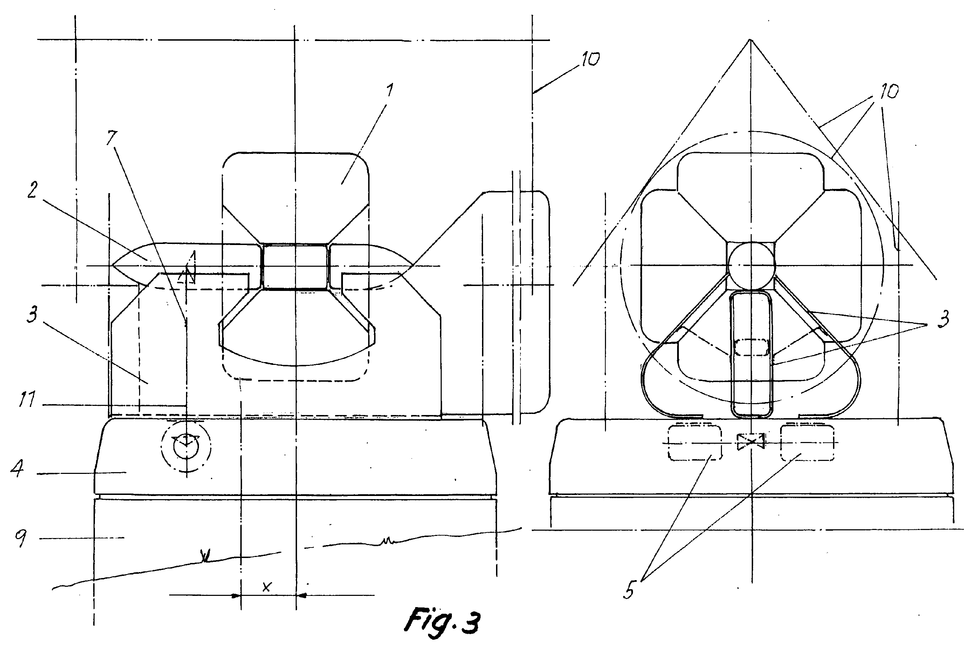

Anderseits sind dank dem kleinen Rotorumfang fast alle Möglichkeiten offen z.B. Ausführung offen, im Rohr, in einem Gehäuse, als Haus versteckt etc, aufgesetzt auf einem Sockel, Podest, Turm oder ähnlichem, gut der Umgebung anpassbar.
Der Aufbau der drehenden Teile (1,2) ist nach Fig. 3 auf einer Plattform (4) auf einem Gestell (3) als Drehbank, in Windrichtung drehbar aufgesetzt. Generator, Getriebe, Bremsen etc sind beiderseits des Rotors in den Naben (2) angeordnet. Der Antrieb auf den Generator erfolgt horizontal in Rotorachsverlängerung. Bei Unterbringung des oder der Generatoren (5) unterhalb der Plattform (4), aufgehängt an diese, erfolgt der Kraftfluss vertikal über Winkelgetriebe (11) wobei der/die Generatoren ein Teil der in den Wind drehbaren Krafteinheit bildet, womit sich Schleifkontakte zur Stromabnahme erübrigen.

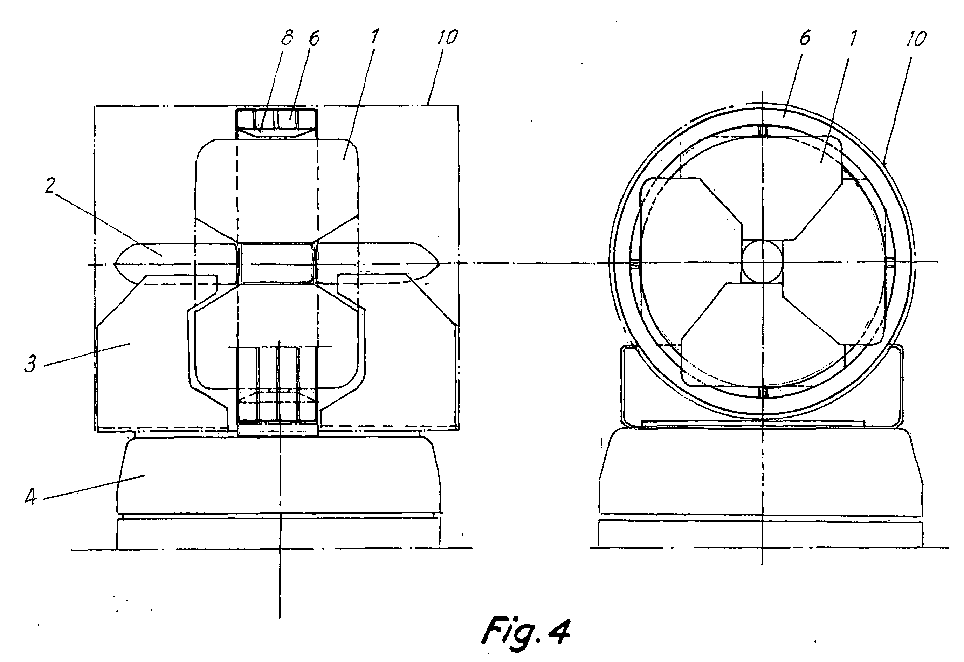

Das genannte Gestell (3) wird durch dünne Platten längs in Windrichtung liegend, gebildet, so sehr wenig Windwiderstand bietend. Durch Versteifung mit Querstreben, ebenfalls längs in Windrichtung, wird hohe Stabilität erzielt. Sehr vorteilhaft wirkt sich die relativ kleine Rotorgröße in getriebeloser Version aus Fig. 4. Ringgeneratoren (6) sind einzeln oder in Reihen nebeneinander, außen herum über den Rotorblättern (1) auf einem Träger (8) (Rohr oder Ring) mit den Rotorblättern (1) formschlüssig verbunden, angeordnet. Die machbare Größe ist begrenzt mit den größten verfügbaren Werkzeugmaschinen zur Fertigung von Guss-/und Spritzgussformen (max. 8 m Ø).

Solche Anlagen mit Ringgeneratoren haben z.B. bei einem Rotor 0 von 6 m, zusammen mit der ohnehin viel höheren Grundschnelligkeit eine sehr hohe Leistungserwartung und dank dem einfachen Aufbau und der geringen Bauhöhe beste Voraussetzung für Tiefhaltung der Gestehungskosten.

Zur Erzielung automatischer Windausrichtung wird die Drehachse im Untersatz (9) zur Systemmitte der Rotorkrafteinheit nach vorn verschoben Fig. 3 (Maß X) Generator, Getriebe etc in der vorderen Nabe untergebracht wirken dabei gewichtsausgleichend.

Freizügigkeit der Gestaltung zeigt sich auch bezüglich Aussehen und Behebung der meisten Oppositionspunkte wie:
- Erscheinungsbild in der Umgebung nicht mehr störend weil solche Anlagen kleiner sind als übliche Eolienne und der Rotor gut getarnt ist Fig. 3 und 4 (10).
- Lärmproblem ist kleiner dank den kleineren Übersetzungen oder den getriebelosen Ausführungen.
- Störung auf dem TV-Bildschirm ist nicht zu befürchten weil neben der geringeren Bauhöhe das geschlossene Kreisbild der Rotation weniger auffällt.
- Militär und Küstenwache: kein Problem wegen Einhaltung des Bauhöhen-Limit, zudem ist die Anlage als Objekt für Piloten gut erkennbar.

## Patentansprüche

1. Windkraftanlage in kompakter Bauart, umfassend
einen Rotor und eine Nabe(2), wobei
der Rotor mit breiten flachen Rotorblättern(1), die die Form eines von der Nabe (2) nach außen verbreiterten Trapeze haben,ausgerüstet ist, wobei
die Nabe(2) mit dem Rotor an beiden Seiten des Rotors auf einem Gestell (3) ähnlich einer Drehbank gelagert ist, und wobei
die tragenden Teile des Gestells(3) als Leitplatten günstig längs in Windrichtung liegen und so sehr wenig Windwiderstand bieten und versteift sind mittels Querstreben, die ebenfalls längs in Windrichtung liegen.

2. Windkraftanlage nach Anspruch 1 in getriebeloser Ausführung **dadurch gekennzeichnet, dass** ein oder mehrere Ringgeneratoren (6) aussen herum über den Rotorblättern, mit diesen formschlüssig verbunden, auf einem Trägerrohr/Ring angeordnet sind.

3. Windkraftanlage nach Ansprüchen 1 und 2, **dadurch gekennzeichnet, dass** die Krafteinheit, die den Rotor, das Getriebe (11), den Generator (5) und das Gestell (3) umfasst, auf einer Plattform (4) auf einem Untersatz (9) drehbar gelagert ist.

4. Windkraftanlage nach Anspruch 3, **dadurch gekennzeichnet, dass** die Drehachse im Untersatz (9) zur Mitte der Rotorkrafteinheit nach vom versetzt ist, wodurch eine automatische Windausrichtung entsteht.

5. Windkraftanlage nach Ansprüche 1 bis 4, **dadurch gekennzeichnet, dass** die Anlage durch längs im Wind liegende Seitenwände (10) und Abdachung oder im Rohr liegend, gegen Witterung und gegen störendes Aussehen abgeschirmt ist.

## Claims

1. Compact wind-engine composed of a rotor and a pod, where :
• The rotor is equipped of flat and wide blades, of trapezoid shape, wider at the outside part than at the central part.
• The two ends of the rotor axle are set on a turning frame.
• The bearing frame's parts have the shape of rudders steering to the direction of the wind, and thus put up only little resistance to the wind. They are strengthened by transversal parts.

2. Wind-engine of concept 1, version without any gearbox, where one or several ringshaped generators are set up around the rotor, and adapted closely to its blades.

3. Wind-engine like concepts 1 and 2, where the power unit, composed of the rotor, the drive, the generator and the frame, is set on a platform supported by a turning base-plate.

4. Wind-engine of concept 3, where the rotation axle of the base-plate is set up forward the centre of gravity of the generator, so that the device is automatically turned head to wind.

5. Wind-engine of concepts 1 to 4, where the device is built between 2 lateral walls and covered by a roof, or set up in a tunnel, in order to shelter it from weather problems and to hide it from view.

## Revendications

1. Une éolienne compacte composée d'un rotor et d'une nacelle où :
• Le rotor est équipé de pales plates et larges en forme de trapèze s'élargissant du centre vers l'extérieur.
• L'axe du rotor repose par ses 2 extrémités sur un châssis tournant.
• Les parties porteuses du châssis formant plaques de guidage comme des gouvernails de girouettes se placent dans la direction du vent, offrant ainsi très peu de résistance au vent. Elles sont maintenues par des renforts transversaux.

2. L'éolienne du concept 1, version sans boîte de vitesses, pouvant recevoir un ou plusieurs générateurs annulaires entourant le rotor et épousant la forme des pales avec précision.

3. L'éolienne selon les concepts 1 et 2, version où l'unité de puissance, qui comprend le rotor, l'entraînement, le générateur et le châssis, repose sur une plate-forme placée sur une base tournante.

4. L'éolienne selon le concept 3 où l'axe de rotation de la base tournante est placé à l'avant par rapport au milieu du générateur, ce qui dirige automatiquement le dispositif face au vent.

5. L'éolienne selon les concepts 1 à 4, où l'installation est placée entre deux murs latéraux et recouverte d'un toit, ou bien placée dans un tunnel, de façon à ce qu'elle soit à l'abri des intempéries et ne choque pas le regard.
